# EUROPEAN PATENT SPECIFICATION

(11) **EP 3 274 628 B1**
(45) Date of publication and mention of the grant of the patent: **16.12.2020**
(21) Application number: 16715182.8
(22) Date of filing: 18.03.2016
(51) Int. Cl.: F22B 1/28, F24D 19/00, F22B 37/48

(54) **VIBRATORY SCALE REDUCTION IN HOT WATER HEATERS, STEAM GENERATORS AND RELATED DEVICES**
KESSELSTEINVERRINGERUNG DURCH VIBRATION BEI DURCHLAUFERHITZERN, DAMPFERZEUGERN UND ZUGEHÖRIGEN VORRICHTUNGEN
RÉDUCTION D'ÉCHELLE VIBRATOIRE DANS DES RADIATEURS À EAU CHAUDE, GÉNÉRATEURS DE VAPEUR ET DISPOSITIFS ASSOCIÉS

(30) Priority: 25.03.2015 US 201562137884 P; 31.07.2015 US 201562199358 P; 29.02.2016 US 201615056220
(43) Date of publication of application: 31.01.2018
(73) Proprietor: Illinois Tool Works Inc., Glenview, IL 60025 (US)
(72) Inventor: CUPP, Timothy, L., Glenview, IL 60025 (US); RECKNER, Michael, B., Glenview, IL 60025 (US)
(74) Representative: Trinks, Ole
(86) International application number: PCT/US2016/023032
(87) International publication number: WO 2016/153964

(56) References cited:
- WO-A1-01/06196
- DE-A1-102007 024 007
- US-A- 4 320 528

## Description

### TECHNICAL FIELD

This application relates generally to steam generators and other hot water heating devices and, more specifically, to a steam generator or other hot water heating device incorporating a vibratory feature that reduces scale formation.

### BACKGROUND

Steam generators are used in a variety of applications such as steam cooking systems. Many such steam generators are used in high volume situations. A typical steam generator includes a heating chamber (e.g., within a tank) with an associated heating element (e.g., gas or electric) that is used to heat water within the tank. As steam is produced and exits the tank (e.g., for delivery to a steam oven cooking chamber), water is added back into the tank. The steam production process produces scale deposits in the tank (e.g., on the inner surfaces of the tank walls and on any internal heating element). To reduce such scale build-up the water delivered into the tank may be filtered and/or treated by known water softening techniques. However, scale build-up still occurs, and such water pre-treatment systems can be expensive. Steam generators can also be periodically "delimed" using a chemical treatment process to remove the scale and flush it out of the steam generator tank. However, deliming is an added, undesired maintenance task for the end customer using the steam generator. Similar problems are encountered in steam generators and/or booster tanks used in warewash machines, as well as other types of water heating tanks.

It would be desirable to provide water heating tanks, such as steam generators, with reduced operational and maintenance costs relating to scale formation. Document WO 01/06196 A1 discloses a steam generator and an ultrasonic cleaning method for cleaning the film, scale and sludge from internal surfaces of tubes, tube-sheets, tube support plates and channel heads of the steam generator.

### SUMMARY

In one aspect, a steam generator for generating steam by boiling water, or other hot water heating device, in either case such as for use in a steam cooker or warewasher, includes a tank structure providing a heating chamber for holding water and including a water inlet, a steam outlet and a water drain outlet. At least one heating element is located for heating water within the heating chamber so as to generate steam. At least one transducer is located on or within the tank structure to cause water within the heating chamber to vibrate so as to reduce scale build-up on one or more surfaces within the heating chamber.

In another aspect, a steam cooker includes steam cooking chamber and a steam generator external of the steam cooking chamber and plumbed to deliver steam from a steam outlet of the steam generator to a steam inlet of the steam cooking chamber. The steam generator includes a tank structure providing a heating chamber for holding water and at least one heating element associated with the tank structure for heating water within the heating chamber so as to generate steam. At least one transducer is associated with the tank structure to cause water within the heating chamber to vibrate so as to reduce scale build-up on one or more surfaces within the heating chamber.

In either of the foregoing aspects, the heating element can be formed by one or more submerged resistive heating elements, and a plurality of transducers are located on a sidewall of the tank and aligned vertically and horizontally with the resistive heating elements.

The details of one or more embodiments are set forth in the accompanying drawings and the description below. Other features, objects, and advantages will be apparent from the description and drawings, and from the claims.

### BRIEF DESCRIPTION OF THE DRAWINGS

Fig. 1 is a schematic view of a steam cooking system including a steam generator; and
Fig. 2 is a cross-sectional view of the steam generator taken along line 2-2 of Fig. 1, with the resistive heating element(s) shown schematically in dashed line form and with the inlet pipe not shown; and
Fig. 3 is a schematic depiction of a warewash machine with a hot water booster and steam generator including vibratory scale reduction.

### DETAILED DESCRIPTION

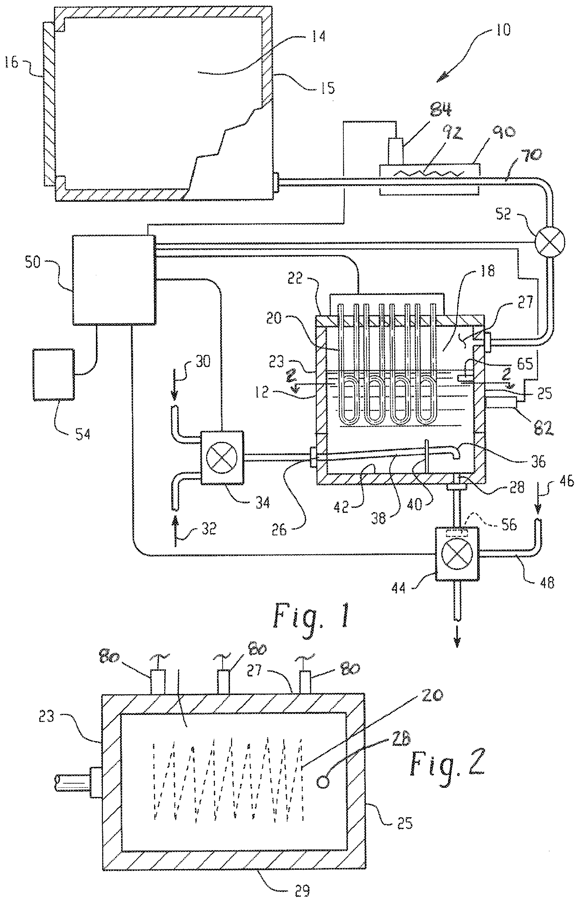

Referring to Figs. 1 and 2, an exemplary steam cooker 10 includes a steam generator 12 for generating steam and a cooking chamber 14 that is in communication with the steam generator. The cooking chamber 14 may be formed by an insulated housing 15 and includes a door 16 that is movable between open and closed positions to provide and inhibit access to the cooking chamber. The steam generator 12 includes opposing minor sidewalls 23, 25, opposing major sidewalls 27, 29, bottom wall 42 and top plate 22 defining a heating chamber 18 where water is heated (e.g., by submerged resistive heating element or elements 20) to generate steam. The steam cooker could be a countertop steamer or a floor-mounted steamer, both of which are commonly used in restaurants and other commercial cooking establishments.

The steam generator 12 includes an inlet 26, which in the illustrated embodiment is an opening in the steam generator wall through which an inlet pipe 38 passes, for ingress of water into the heating chamber 18 from a water source, and an outlet 28 for egress or draining of water from the heating chamber (e.g., when the chamber is to be drained based upon operation of a drain flow control device 44 (e.g., a valve), which in some cases may also control flow of cooling water from a water source (represented by arrow 46) that is connected to conduit 48). A temperature sensor 56 may be used to monitor water temperature of the draining water.

Inlet 26 can receive water from a filtered water source as represented by arrow 30 and/or an unfiltered water source as represented by arrow 32. In some cases, by making use of the vibratory scale reducing feature described below, the need for a filtered water source may be eliminated. An inlet flow control device 34 (e.g., a valve) may be located between the inlet 26 and both water sources to allow for selection between filtered and unfiltered water and to generally control the flow of water to the inlet 26 (e.g., under control of a controller 50 which receives water level signals from one or more sensors 65). Where only one source of water is provided, the flow control device 34 controls the flow from just the one source. A pre-selected water or fill level may be set. The fill level may be monitored using the water level sensor 65 (or multiple water level sensors) that provides an indication to the controller 50 of the level of the water within the heating chamber 18, including at least that sufficient water is present to operate the resistive heating elements in order to generate steam. The sensor(s) 65 may be within the main heating chamber 18 as shown, or could be contained in a housing unit that is placed alongside the main heating chamber and includes a path of fluid communication with the heating chamber (as might be provided by tubing).

Controller 50 is used to control flow of water to the heating chamber 18 through the inlet 26 and from the heating chamber through the outlet 28 and may also be used to activate and deactivate the heating elements 20 (e.g., in response to an indication received from a user interface 54 including a generator OFF/ON input). As steam is produced it exits the generator along path 70 (e.g., steam flow may be controlled by valve 52) and the water level in the heating chamber 18 drops. When the water level sensor(s) 65 detect a drop below a desired level, more water is added. This process repeatedly occurs during steam generation, and as water is boiled within the heating chamber minerals in the water remain and build-up over time, creating the potential for such minerals to deposit as scale on the surfaces within the heating chamber.

In this regard, the steam generator includes one or more sidewall mounted vibratory mechanisms 80 that operate to cause the water within the heating chamber 18 to vibrate. In the illustrated embodiment a series (here 3) of vibratory mechanisms 80 are distributed along the sidewall of the tank so as to be aligned vertically and/or horizontally with the resistive heating element(s) 20. However, other configurations are possible. Each vibratory mechanism 80 may be in the form of a transducer such as a high frequency transducer. By way of example, an ultrasonic transducer (e.g., of piezoelectric type) may be used, where each transducer is driven by a common frequency generator or where each transducer is driven by an independent frequency generator. The ultrasonic waves produced by the ultrasonic transducer are transmitted through the steam generator wall and cause the water to vibrate rapidly. The rapid vibration of the water within the steam generator inhibits scale build-up on the internal surfaces of the steam generator, including the heating element(s) 20. In some cases a bubbling effect within the water may be produced.

Thus, the need for use of pre-treated water can be significantly reduced or eliminated, and the need to run deliming operations on the steam generator can be significantly reduced or eliminated. The ultrasonic vibrations may also aid in removing any scale that has built up in the steam generator for any reason. Thus, production of ultrasonic vibrations during deliming operations may aid in the speed and/or effectiveness of the delime operation. Reduction of scale build-up on the heating element(s) 20 also enhances overall, long-term energy efficiency of the steam generator.

In one implementation, the ultrasonic transducer(s) 80 may be continually operated during all periods of steam generator operation, and only stopped when the steam generator is turned off. Alternatively, the transducer(s) 80 may be operated periodically or intermittently during steam generator operation. As noted above, the ultrasonic transducer(s) 80 may also be operated during deliming.

The ultrasonic transducer(s) 80 may be occasionally or periodically operated according to one or more predefined parameters. The ultrasonic transducer(s) 80 is turned on for a defined time period based upon a triggering parameter such as (i) duration of steam generator operation, (ii) amount of water added to the steam generator over time, (iii) number of cooking cycles of an associated steam oven or (iv) some other parameter indicative of potential scale build-up in the steam generator.

In some implementations the triggering parameters can be adjusted through the control system interface (e.g., by service personnel) to account for known factors such as the hardness of the water being used at a location of steam generator install.

In one implementation the ultrasonic frequency of the transducer(s) 80 may be maintained constant (e.g., a frequency in the range of 25 kHz to 75kHz, though other variations are possible). In other implementations the ultrasonic frequency may be varied during the course of transducer operation to better inhibit the scale formation. The transducer(s) 80 could be operated at one frequency or frequency range for scale inhibition and at another frequency or frequency range for scale removal.

In some applications acoustic insulation could be included around the ultrasonic transducer(s) 80 and/or steam generator tank 12 to reduce any noise produced to an acceptable level according to the environment in which the steam generator is being used.

While the above description focuses on the use of one or more ultrasonic transducer(s) on a sidewall of the steam generator, it is recognized that one or more transducer(s) could be positioned on a bottom wall. Furthermore, although an external transducer is shown, it is recognized that the transducer could be located internal of the steam generator as well. The size and power output of the transducer(s) may vary depending upon the size/volume of the steam generator.

As suggested in Fig. 1, the steam cooker 10 may further include a superheater arrangement 90 along the steam path 70. The superheater includes one or more resistive heating elements 92 (e.g., external or internal of the steam path) for transferring additional heat to the steam traveling along the steam path 70 for the purpose of superheating the steam. Generally, steam is considered superheated when the temperature of the steam is increased above 100 degrees Celcius (212 degrees F) without pressurization. In such arrangements scale deposits can also occur within the supherheater 90. To reduce such scale build-up one or more ultrasonic transducer(s) 82 may be located on the steam generator sidewall 25 proximate the steam outlet to the steam path 70 so that some vibration will be transferred along the steam path structure to the surfaces of the superheater 90, which in some cases can deter scale particles (borne by the steam flow) from attaching to the surfaces of the superheater. One or more ultrasonic transducer(s) 84 could also be attached directly to the superheater 90 as shown for more effective vibratory action. In some circumstances, one, two or all three of the transducers 80, 82 and 84 may be implemented in a single steam cooker.

Although resistive heating elements are primarily described above for the steam generator and the superheater, it is also recognized that other heating devices (e.g., gaseous heat exchangers carrying combustion gases) could be used. Moreover, such ultrasonic scale control could also be implemented in steam generators used for purposes other than steam cookers (e.g., such as for steam production in warewash machines) and the ultrasonic scale control could also be implemented in other types of water heating tanks (e.g., such as hot water booster tanks used to heat rinse water in warewash machines).

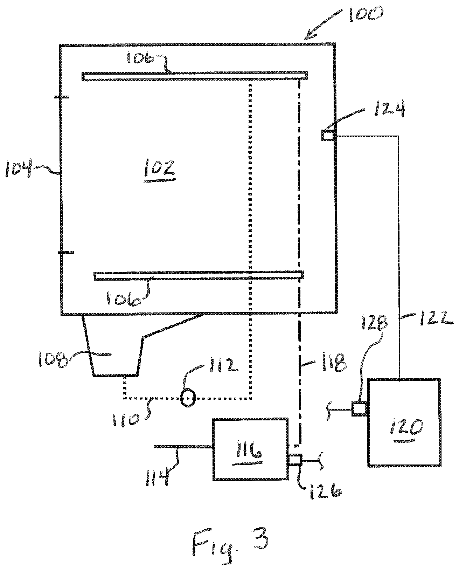

By way of example, a warewash machine 100 is shown schematically in Fig. 3 and includes one or more wash and/or rinse chamber(s) 102 accessible by one or more door(s) 104. The wash and/or rinse chamber(s) may include one or more spray arm(s) 106 (stationary or rotating, with associated spray nozzles) for spraying wash and/or rinse liquid. The wash liquid may be recirculated via a sump 108, recirculation line 110 and pump 112. The rinse liquid may be fresh water delivered by inlet line 114 to a booster tank 116 that heats the water to be delivered by line 118 to the spray arms. The warewash machine may also include a steam generator 120 that delivers steam by a line 122 to one or more steam nozzles 124 in the wash chamber. Further details regarding warewash machines (both box-type and conveyor-type) can be found in U.S. Patent Nos. 8,663,395 and 8,679,261. Referring again to Fig. 3, each of the hot water booster 116 and/or the steam generator can include one or more respective ultrasonic transducer(s) 126, 128 for the purpose of scale reduction as described above.

## Claims

1. A steam generator (12) for generating steam by boiling water, the steam generator (12) including:
- a tank structure providing a heating chamber (18) for holding water and including a water inlet (26), a steam outlet and a water drain outlet (28);
- at least one heating element (20) for heating water within the heating chamber (18) so as to generate steam; and
- at least one transducer (80) located on or within the tank structure to cause water within the heating chamber (18) to vibrate,
**characterized in that**
the transducer (80) is configured to be operated during steam generation for a predefined time period based on a monitored triggering parameter such as duration of the steam generator (12) operation, amount of water added to the steam generator (12) over time, or number of heating cycles of an associated apparatus so as to reduce scale build-up on one or more surfaces within the heating chamber (18).

2. The steam generator (12) of claim 1,
wherein the transducer (80) comprises an ultrasonic transducer.

3. The steam generator (12) of claim 2,
wherein the ultrasonic transducer (80) is mounted externally of the heating chamber (18) on a wall (23, 25, 29) of the tank structure and below an operating water level of the heating chamber (18).

4. The steam generator (12) of claim 2 or 3,
wherein the ultrasonic transducer (80) is positioned within the heating chamber (18) and below an operating water level of the heating chamber (18).

5. The steam generator (12) of one of the preceding claims,
wherein the transducer (80) is operated continuously during steam generating operation of the steam generator (12).

6. The steam generator (12) of one of claims 1 to 4,
wherein the transducer (80) is operated periodically or intermittently during steam generating operation of the steam generator (12).

7. The steam generator (12) of one of the preceding claims,
wherein the heating element (20) comprises one or more submerged resistive heating elements (20), and a plurality of transducers (80) are located on a sidewall (23, 25) of the tank and aligned vertically and horizontally with the resistive heating elements (20).

8. A steam cooker (10), comprising:
- a steam cooking chamber (14);
- a steam generator (12) as defined in one of the preceding claims external of the steam cooking chamber (14) and plumbed to deliver steam from a steam outlet of the steam generator (12) to a steam inlet of the steam cooking chamber (14).

9. A water heating apparatus, including:
- a tank structure providing a heating chamber (18) for holding water and including a water inlet (26) and a water outlet;
- at least one heating element (20) for heating water within the heating chamber (18); and
- a transducer (80) located on or within the tank structure to cause water within the heating chamber (18) to vibrate so as to reduce scale build-up on one or more surfaces within the heating chamber (18),
**characterized in that**
the transducer (80) is configured to be operated during the heating operation for a predefined time period based on a monitored triggering parameter such as duration of the heating operation, amount of water added to the water heating apparatus over time, or number of heating cycles so as to reduce scale build-up on one or more surfaces within the heating chamber (18).

10. The apparatus of claim 9,
wherein the transducer (80) comprises an ultrasonic transducer (80).

11. The apparatus of claim 9 or 10,
wherein the ultrasonic transducer (80) is mounted externally of the heating chamber (18) on a wall of the tank structure and below an operating water level of the heating chamber (18).

12. The apparatus of one of claims 9 to 11,
wherein the transducer (80) is operated either continuously during water heating or intermittently during water heating.

13. A warewasher (100) including the water heating apparatus of one of claims 9 to 12, further comprising:
- a set of spray nozzles plumbed to receive heated water for rinsing from the water heating apparatus, and to spray the heated water within a ware cleaning chamber (102) or spray zone of the warewasher (100).

## Patentansprüche

1. Dampferzeuger (12) zum Erzeugen von Dampf durch siedendes Wasser, wobei der Dampferzeuger (12) umfasst:
- eine Tankstruktur, die mit einer Heizkammer (18) zum Aufnehmen von Wasser versehen ist und einen Wassereinlass (26), einen Dampfauslass und einen Wasserablaufauslass (28) umfasst;
- mindestens ein Heizelement (20) zum Erhitzen von Wasser in der Heizkammer (18), um Dampf zu erzeugen; und
- mindestens einen Wandler (80), der an oder in der Tankstruktur angeordnet ist, um Wasser in der Heizkammer (18) in Schwingung zu versetzen,
**dadurch gekennzeichnet, dass**
der Wandler (80) ausgestaltet ist, während einer Dampferzeugung für eine vordefinierte Zeitdauer basierend auf einem überwachten Auslöseparameter, wie beispielsweise einer Dauer des Betriebs des Dampferzeugers (12), einer Menge an dem Dampferzeuger (12) im Zeitverlauf zugeführtem Wasser oder einer Anzahl von Heizzyklen einer zugehörigen Einrichtung, betrieben zu werden, um eine Kesselsteinbildung an einer oder mehreren Flächen in der Heizkammer (18) zu reduzieren.

2. Dampferzeuger (12) nach Anspruch 1,
wobei der Wandler (80) einen Ultraschallwandler umfasst.

3. Dampferzeuger (12) nach Anspruch 2,
wobei der Ultraschallwandler (80) extern zu der Heizkammer (18) an einer Wand (23, 25, 29) der Tankstruktur und unterhalb eines Betriebswasserpegels der Heizkammer (18) angebracht ist.

4. Dampferzeuger (12) nach Anspruch 2 oder 3,
wobei der Ultraschallwandler (80) in der Heizkammer (18) und unterhalb eines Betriebswasserpegels der Heizkammer (18) angebracht ist.

5. Dampferzeuger (12) nach einem der vorhergehenden Ansprüche,
wobei der Wandler (80) während eines Dampferzeugungsbetriebs des Dampferzeugers (12) ununterbrochen betrieben wird.

6. Dampferzeuger (12) nach einem der Ansprüche 1 bis 4,
wobei der Wandler (80) während eines Dampferzeugungsbetriebs des Dampferzeugers (12) periodisch oder intermittierend betrieben wird.

7. Dampferzeuger (12) nach einem der vorhergehenden Ansprüche,
wobei das Heizelement (20) ein oder mehrere untergetauchte Widerstandsheizelemente (20) umfasst, und wobei eine Mehrzahl von Wandlern (80) an einer Seitenwand (23, 25) des Tanks angeordnet und vertikal und horizontal mit den Widerstandsheizelementen (20) ausgerichtet ist.

8. Dampfkocher (10), umfassend:
- eine Dampfkochkammer (14);
- einen Dampferzeuger (12) nach einem der vorhergehenden Ansprüche extern zu der Dampfkochkammer (14) und derart angeschlossen, dass Dampf von einem Dampfauslass des Dampferzeugers (12) zu einem Dampfeinlass der Dampfkochkammer (14) zugeführt wird.

9. Wassererhitzungseinrichtung, umfassend:
- eine Tankstruktur, die mit einer Heizkammer (18) zum Aufnehmen von Wasser versehen ist und einen Wassereinlass (26) und einen Wasserauslass umfasst;
- mindestens ein Heizelement (20) zum Erhitzen von Wasser in der Heizkammer (18); und
- einen Wandler (80), der an oder in der Tankstruktur angeordnet ist, um Wasser in der Heizkammer (18) in Schwingung zu versetzen, um eine Kesselsteinbildung an einer oder mehreren Flächen in der Heizkammer (18) zu reduzieren,
**dadurch gekennzeichnet, dass**
der Wandler (80) ausgestaltet ist, während des Heizbetriebs für eine vordefinierte Zeitdauer basierend auf einem überwachten Auslöseparameter, wie beispielsweise einer Dauer des Heizbetriebs, einer Menge an der Wassererhitzungseinrichtung im Zeitverlauf zugeführtem Wasser oder einer Anzahl von Heizzyklen, betrieben zu werden, um eine Kesselsteinbildung an einer oder mehreren Flächen in der Heizkammer (18) zu reduzieren.

10. Einrichtung nach Anspruch 9,
wobei der Wandler (80) einen Ultraschallwandler (80) umfasst.

11. Einrichtung nach Anspruch 9 oder 10,
wobei der Ultraschallwandler (80) extern zu der Heizkammer (18) an einer Wand der Tankstruktur und unterhalb eines Betriebswasserpegels der Heizkammer (18) angebracht ist.

12. Einrichtung nach einem der Ansprüche 9 bis 11,
wobei der Wandler (80) entweder ununterbrochen während einer Wassererhitzung oder intermittierend während einer Wassererhitzung betrieben wird.

13. Geschirrspülmaschine (100) umfassend die Wassererhitzungseinrichtung nach einem der Ansprüche 9 bis 12, ferner umfassend:
- einen Satz von Sprühdüsen, die derart angeschlossen sind, dass sie erhitztes Wasser zum Spülen von der Wassererhitzungseinrichtung empfangen und das erhitzte Wasser innerhalb einer Geschirrreinigungskammer (102) oder Sprühzone der Geschirrspülmaschine (100) versprühen.

## Revendications

1. Générateur de vapeur (12) destiné à générer de la vapeur en faisant bouillir de l'eau, le générateur de vapeur (12) comportant :
- une structure de cuve fournissant une chambre de chauffage (18) destinée à contenir de l'eau et comportant une entrée d'eau (26), une sortie de vapeur et une sortie de purge d'eau (28) ;
- au moins un élément chauffant (20) destiné à chauffer l'eau à l'intérieur de la chambre de chauffage (18) de manière à générer de la vapeur ; et
- au moins un transducteur (80) situé sur ou à l'intérieur de la structure de cuve pour faire vibrer l'eau à l'intérieur de la chambre de chauffage (18),
**caractérisé en ce que**
le transducteur (80) est configuré pour fonctionner pendant la génération de vapeur pendant un laps de temps prédéfini basé sur un paramètre de déclenchement surveillé tel que la durée de fonctionnement du générateur de vapeur (12), la quantité d'eau ajoutée au générateur de vapeur (12) dans le temps ou le nombre de cycles de chauffage d'un appareil associé, de manière à réduire l'accumulation de tartre sur une ou plusieurs surfaces à l'intérieur de la chambre de chauffage (18).

2. Générateur de vapeur (12) de la revendication 1,
dans lequel le transducteur (80) comprend un transducteur ultrasonore.

3. Générateur de vapeur (12) de la revendication 2,
dans lequel le transducteur ultrasonore (80) est monté à l'extérieur de la chambre de chauffage (18) sur une paroi (23, 25, 29) de la structure de cuve et sous un niveau d'eau de fonctionnement de la chambre de chauffage (18).

4. Générateur de vapeur (12) de la revendication 2 ou 3,
dans lequel le transducteur ultrasonore (80) est positionné à l'intérieur de la chambre de chauffage (18) et sous un niveau d'eau de fonctionnement de la chambre de chauffage (18).

5. Générateur de vapeur (12) d'une des revendications précédentes,
dans lequel le transducteur (80) fonctionne en continu pendant l'opération de génération de vapeur du générateur de vapeur (12).

6. Générateur de vapeur (12) d'une des revendications 1 à 4,
dans lequel le transducteur (80) fonctionne périodiquement ou par intermittence pendant l'opération de génération de vapeur du générateur de vapeur (12).

7. Générateur de vapeur (12) d'une des revendications précédentes,
dans lequel l'élément chauffant (20) comprend un ou plusieurs éléments chauffants résistifs immergés (20), et une pluralité de transducteurs (80) sont situés sur une paroi latérale (23, 25) de la cuve et alignés verticalement et horizontalement avec les éléments chauffants résistifs (20).

8. Cuiseur à vapeur (10), comprenant :
- une chambre de cuisson à la vapeur (14) ;
- un générateur de vapeur (12) tel que défini dans une des revendications précédentes à l'extérieur de la chambre de cuisson à la vapeur (14) et raccordé pour délivrer de la vapeur depuis une sortie de vapeur du générateur de vapeur (12) jusqu'à une entrée de vapeur de la chambre de cuisson à la vapeur (14).

9. Appareil de chauffage d'eau, comportant :
- une structure de cuve fournissant une chambre de chauffage (18) destinée à contenir de l'eau et comportant une entrée d'eau (26) et une sortie d'eau ;
- au moins un élément chauffant (20) destiné à chauffer l'eau à l'intérieur de la chambre de chauffage (18) ; et
- un transducteur (80) situé sur ou à l'intérieur de la structure de cuve pour faire vibrer l'eau à l'intérieur de la chambre de chauffage (18) de manière à réduire l'accumulation de tartre sur une ou plusieurs surfaces à l'intérieur de la chambre de chauffage (18),
**caractérisé en ce que**
le transducteur (80) est configuré pour fonctionner pendant l'opération de chauffage pendant un laps de temps prédéfini basé sur un paramètre de déclenchement surveillé tel que la durée de l'opération de chauffage, la quantité d'eau ajoutée à l'appareil de chauffage d'eau dans le temps ou le nombre de cycles de chauffage, de manière à réduire l'accumulation de tartre sur une ou plusieurs surfaces à l'intérieur de la chambre de chauffage (18).

10. Appareil de la revendication 9,
dans lequel le transducteur (80) comprend un transducteur ultrasonore (80).

11. Appareil de la revendication 9 ou 10,
dans lequel le transducteur ultrasonore (80) est monté à l'extérieur de la chambre de chauffage (18) sur une paroi de la structure de cuve et sous un niveau d'eau de fonctionnement de la chambre de chauffage (18).

12. Appareil d'une des revendications 9 à 11,
dans lequel le transducteur (80) fonctionne soit en continu pendant le chauffage de l'eau, soit par intermittence pendant le chauffage de l'eau.

13. Lave-vaisselle (100) comportant l'appareil de chauffage d'eau d'une des revendications 9 à 12, comprenant en outre :
- un ensemble de buses d'aspersion raccordées pour recevoir de l'eau chauffée pour rinçage depuis l'appareil de chauffage d'eau, et pour asperger l'eau chauffée à l'intérieur d'une chambre de nettoyage de vaisselle (102) ou asperger une zone du lave-vaisselle (100) .
